# EUROPEAN PATENT SPECIFICATION

(11) **EP 0 617 899 B1**
(45) Date of publication and mention of the grant of the patent: **23.07.1997**
(21) Application number: 93830138.9
(22) Date of filing: 02.04.1993
(51) Int. Cl.: A23L 1/068, A23C 9/133, A23C 9/15, A23L 1/064

(54) **A fresh, creamy, fruit-containing spread and process for preparing the same**
Frischer, cremiger, Früchte enthaltender Aufstrich und Verfahren zu seiner Zubereitung
Denrée à tartiner fraîche crémeuse contenant des fruits et procédé pour la préparation de celle-ci

(30) Priority: 30.03.1993 IT MI930616
(43) Date of publication of application: 05.10.1994
(73) Proprietor: SITIA-YOMO S.p.A., I-20139 Milano (IT)
(72) Inventor: Cavaliere Vesely, Renata, Milano (MI) (IT); Giani, Giovanni, Pasturago di Vernate (MI) (IT); Cingoli, Vittorio, Milano (IT); Maiocchi, Gianluigi, Codogno (MI) (IT)
(74) Representative: Righetti, Giuseppe

(56) References cited:
- EP-A- 0 283 101
- DE-C- 169 911
- GB-A- 2 207 849

## Description

The present invention relates to a process for preparing a fresh, creamy, fruit-containing spread, which is free from additives and contains a remarkable amount of live lactic ferments in optimal ratio, and to a spread which is obtainable by said process. The fruit preparations employed in the process and spread object of the present invention are absolutely natural, that is free from aromatizers, preservants, antioxidants, thickeners and acidity controllers.

Many alimentary spreads which are more or less fat are presently on the market. Particular preparation technologies are common to all these specialities, and they make the products thus obtained generally poor in or completely devoid of lactic charge. Said products contain moreover fruit compositions always added with preservants, flavouring agents, antioxidants, thickeners and acidity controllers.

Bacteriological analyses carried out on other products of the same type as far as their preparation is concerned and actually on the market, have shown the following values in lactic charge:

| Danito: | absent/1 g |
|---|---|
| S. thermophilus | < 10 g |
| L. bulgaricus | < 10 g |
| Mesophilic | < 10 g |

| Fruttolo: | absent/1 g |
|---|---|
| S. thermophilus | < 10 g |
| L. bulgaricus | < 10 g |
| Mesophilic | < 10 g. |

From the literature two main processes are known for obtaining fat or semi-fat dairy products: one employing the centrifugal separation technology and the other based on ultrafiltration.

Where the centrifugal separation is concerned, after the usual milk treatments (cleaning, degassing, pasteurization, and so on) and the inoculation with lactic ferments (maturation), the acidified milk is heated and submitted to centrifugal separation at temperatures ranging between 60 and 80°C. Thus a concentrate is obtained which is then mixed with cream and alternatively, in the case of products contemplating the addition of fruit, with aromatized fruit preparations to which preservants, dyes, flavouring agents, antioxidants and acidity controllers have been added. As mentioned above, the end product has a lactic flora almost always completely inactivated as a result of the heat treatments, a reduced creamy taste and a particular flaky structure.

The ultrafiltration technology exhibits some advantages as compared to the centrifugal separation. So the concentration process taking place directly on the acidified milk allows reduced processing temperatures to be adopted (maximum 40°C), so that the lactic ferments survival can be ensured. Furthermore it enables the nutritional milk components to be recovered, such as for example seroproteins, which would otherwise be lost in the serum when traditional treatments are applied. In fact the centrifugal separation must necessarily need the use of high temperatures (60 to 80°C) for long times on the acidfied milk which is being concentrated, said high temperatures being generally lethal for lactic ferments.

In many cases the concentrated finished product arising from ultrafiltration is stadardized at a pH 4.8 by the addition of small amounts of cream and afterwards heated to 80-90°C. Then fruit preparations containing flavouring agents, dyes, acidity controllers and antioxidants are added in order to enhance the fragrance, colour and structure of the product.

EP-A-0283101 discloses a spread containing flavouring ingredients and a process for the preparation of an acidified paste-like spreadable milk product enriched with whey protein, suitable to be mixed with sweet or savoury ingredients, starting from a mixture of a milk product rich in whey protein and a milk product rich in fat. Such mixture is acidified after addition of a yogurt starter culture by incubation at an appropriate temperature, e.g. 30-37°C, in particular 31°C, until a pH of 3.6-4.5, in particular 3.8-4.0. Then, the resulting paste-like spreadable milk product is mixed with sweet ingredients (e.g. preparations consisting of fruit purée and sugar) or with savoury preparations. The pasta-like product can be heated, before or after mixing with flavouring components, to destroy or inactivate microorganisms present. If required, nutrient acids, conventional natural colourings and flavourings, and consistency enhancing agents can be added.

GB-A-2207849 discloses a spread which contains live lactic ferments and ingredients, such as tunny, salmon, tomato, olives, etc., and is free from additives. The process for preparing such spread comprises: a preliminary milk treatment; a maturation by means of a mixture of mesophilic and thermophilic lactic ferments in a ratio 80:20, carried out for about eleven hours, until a pH of 4.6-4.7 is reached; a concentration by ultrafiltration at a constant temperature of 40°C maximum; a mixing and homogenization with cream, salt and the desired ingredients. After the maturation step, the semi-finished product is not subjected to any heat treatment.

For the purpose of finding a new process able to provide a product having particular structural organoleptic characteristics, a procedure has been developed which substantially differs from the known procedures in respect of the single steps sequence and which allows to obtain a product which is remarkably higher in quality than those actually on the market as far as freshness, savouriness, flavour, creamy taste and appearance is concerned, and above all high presence of live lactic ferments.

Consequently it is an object of the present invention to provide a process for preparing a fresh, creamy, fruit-containing spread which contains live thermophilic lactic ferments and is free from all the additives presently used in the known products.

It is a further object of the present invention to provide a fresh, creamy, fruit-containing spread which contains live thermophilic lactic ferments and is free from all the additives presently used in the known products.

The essential features of the process and product according to the present invention are defined in the independent claims 1 and 7 respectively. Specific embodiments are defined in the dependent claims.

The permeate obtained from the ultrafiltration carried out in step (c) can be used for animals feeding, whereas the concentrated semi-finished product is addressed to two different lines, i.e.;
a) a natural product line,
b) product with ingredient line;

In the case of natural product, mixing and homogenization are carried out by adding pasteurized cream and sugar, and then homogenization or smoothing the paste deriving from the preceeding mixing takes place (still at a temperature of 40°C) under such conditions that the product acquires a particular creamy structure, adapted to be spread, which means that no heat treatment has been carried out.

In the case of a product with ingredients, apart prepared mixtures comprising sugar and fruit compositions are added to the concentrate. Both products are sent to suitable tanks which are kept under sterile air overpressure up to the packaging. From tanks the product is forwarded to s sterile packaging machine, where sterility is kept from the metering step to the sealing of the end product.

As evident from the above description, the end product does not undergo any heat treatment for microbic stabilization after the concentration and therefore the vitality of lactic ferments is ensured. In this way it is also possible to be sure that the product will have high hygienical qualities, which are but the result of the high aseptic level studied on purpose for the process of the invention. Such aseptic level is ensured by:
- aseptic air overpressure in the different tanks starting from maturation,
- sterile packaging with an aseptic device,
- previously making all lines and tanks aseptic with water at 85°C.

This particular preparation technology provides the end product with a personalized flavour and a creamy taste and appearance which are obtained without the use of flavouring agents or additives; furthermore it has a particular microstructure which is the result of the absolute absence of heat treatments and of the new homogenization step.

As compared with known provcesses, the present process is characterized by: a) absence of the initial homogenization step, b) content of live thermophilic lactic ferments in a suitable ratio and in a notable amount, c) absence of flavouring agents, additives and of stabilizing heat treatments, and d) absolutely natural fruit preparations.

Inoculation of the milk in maturation tanks takes place with termophilic lactic ferments in an amount of 1%. The applicant has selected for the new product a particular ration of cocci to rods, so that a remarkable number and vitality in all species is reached in the end product, and these values remains almost constant until the product out of date. The presence and harmonious combination of the selected lactic ferments species are able to provide the product object of the present invention with particular and personalized organoleptic characteristics which distinguish it from all the similar product present on the market.

The optimal ratio of cocci to rods can vary from 5 to 15:1, preferably it is of 15:1 and more particularly of 10:1.

It has been surprising to have been able to select a particular combination of S. thermophilus and L. bulgaricus in the thermophilic field, so that a notable amount and the vitality of both the species in the and product are reached.

Furthermore it has been ascertained that the addition of further thermophilic species, as L. acidophilus and Bifido-bacterium infantis, during the inoculation step and according to a level of 0,5-1% together with the thermophilic combination as previously defined, could provide the product with further nutritional and healthy properties without altering the fundamental characteristics thereof.

The particular preparation technology, as well as the exclusive and natural fruit compositions, absolutely free from additives, provide the new spread with personalized flavours and clear freshness, creamy taste and spreadability characteristics which make it well attractive, even though containing a fat matter on the dry substance of on average 26%. Said characteristics make the new spread well suitable for the early childhood feeding.

The concentrated semi-finished product obtained from ultrafiltration can be forwarded to the socalled natural product line, and in this case it is mixed with pasteurized cream and sugar, or to the product-with-ingredient line. In the latter case, the semi-finished product is added with particular fruit preparations. Said preparations are absolutely natural and during the mixing step there is no addition of additives. The addition to the concentrated product of the fruit preparations takes place at 30-40°C and on average in an amount of 20-30%, preferably of 27-30%, based on the concentrated semi-finished product added with cream and sugar.

Said ingredients are also sanitized apart before their adding without altering their characteristics. The mixtures thus obtained by way of non-limiting example consist mainly of:
a) mashed apples, sugar
b) mashed bananas, sugar
c) mashed strawbwerries, strawberry juice, mashed rspberries and raspberry juice, mashed blueberries, blueberry juice, sugar (the socalled woodfruit mixture),
d) mashed pear, sugar
e) mashed citrus, sugar
f) mashed pineapples, sugar.

Logically this list is only indicative, in that further fruit preparations can be added. Anyway, in comparison to the concentrated natural product, said fruit preparations are better than the products already on the market. Said superiority is due to the use of absolutely natural fruit to which no flavouring agents have been added.

A comparison with the best known products has furnished the following results:

| | |
|---|---|
| Product of the invention | fruit 27-30% |
| Danito | fruit 25% |
| Fruttolo | fruit 20% ca. |

Before the heat sanification, the fruit preparations are suitably refined so as to obtain a particle size of 0,2 mm, a texture level which is ideal for the early childhood feeding and for providing the product with a creamy and homogenous structure.

As mentioned above, further mixtures can be prepared according to the consumer taste, as for example:
a) mashed apricots, sugar;
b) mashed raspberries, sugar;
c) mashed pineapples, sugar;
d) mashed pears, sugar;
e) mashed citrus, sugar;
f) mashed strawberries, sugar.

The average characteristics of some of these new products are listed here below:

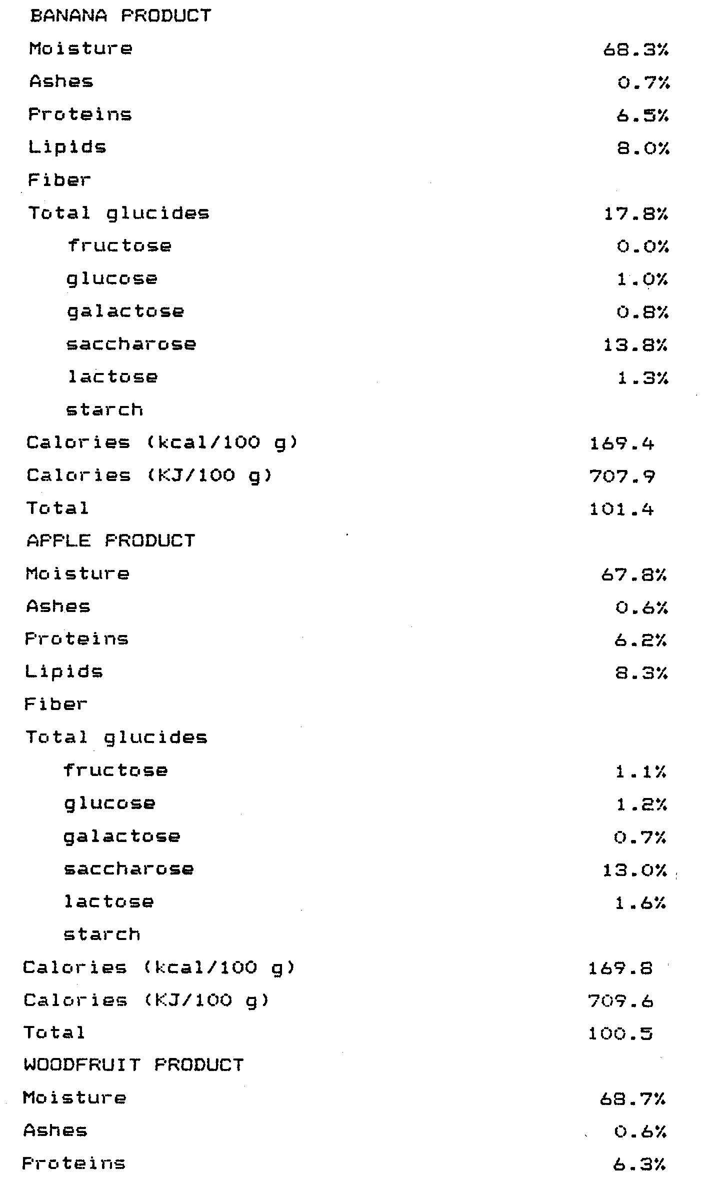

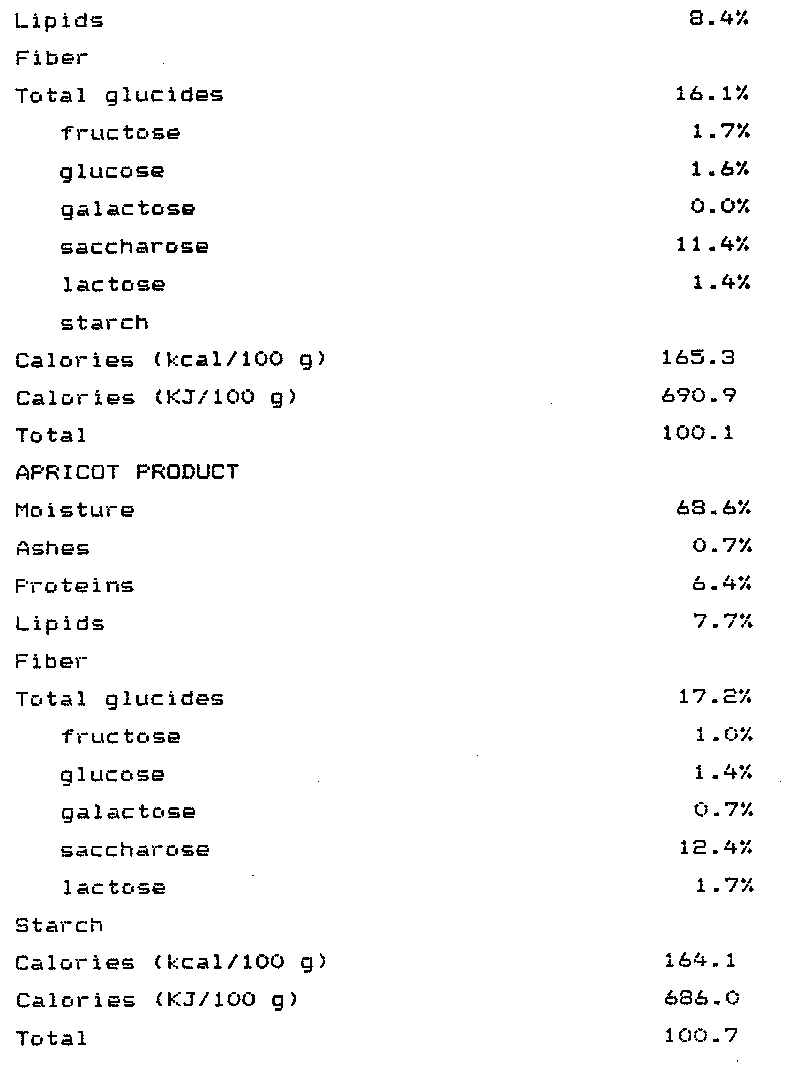

A detailed illustrative example of how to put the process of the invention into practice is given here below.

### EXAMPLE

### 1) Preliminary milk treatments

Raw milk containing 3.5% of fat matter and stored at a temperature of 4°C, is cleaned and, if necessary, titrated. Milk is then pre-heated at a temperature of 80°C and concentrated within suitable concentrators to evaporate the smells still present and to bring it at a fat content of 4.2% and to a protein content of 3.50-3.60%. The subsequent steps are pasteurization at 95°C comprising a five minutes rest, cooling at a temperature of 40°C and introduction of the milk into maturation tanks provided with sterile air overpressure and previously made aseptic with hot water (85°C).

### 2) Maturation step

The inoculation in the overall amount of 1% takes place with a ratio of cocci to rods of preferably 10:1. Then liquid rennet is added at a titre of 1:10,000 according to a levl of 1.5ml/100 litres of milk, at a pH of 6.4. After short stirring the product is allowed to stand and once it has reached a pH of 4.9-5.0 the lactic curd was broken. The average maturation time is of 6 hours.

### 3) Concentration step

At a constant temperature of 40°C an uninterrupted ultrafiltration was carried out directly on the acidified milk. The permeate thus obtained which is used for the animal feeding has the following characteristics:
proteins: traces
lactose: 4.6%
fat just as it is: 0%
non-protein nitrogen: 0.135%
total solids: 6.35%

The concentrated semi-finished product is forwarded to two different lines: a) natural product line and b) product-with-ingredient line.

### 4) Mixing and homogenization

In the case of the natural product a) of step 3), to the concentrate pasteurized cream and sugar were added. The subsequent homogenization (120-150 bar) and smoothing of the paste arising from previous mixing (40°C) takes place under such conditions to provide the product with a spreadable, creamy microstructure revealing a complete absence of heat treatments.

On the contrary, in the case of the product with ingredients b) of step 3), to the concentrate (semi-finished product with cream and sugar) from 25 to 30% of previously prepared fruit compositions were added. Said compositions consist mainly of:
- mashed apples, sugar
- mashed bananas, sugar
- mashed strawberries, strawberry juice, mashed raspberries, raspberry juice, mashed blueberries, blueberry juice (woodfruit mixture), sugar
- mashed raspberries, sugar
- mashed pineapples, sugar
- mashed pears, sugar
- mashed citrus, sugar
- mashed strawberries, sugar
- mashed apricots, sugar.

Said fruit preparations are fully natural, that is they are free from any additive and have been previosuly refined until a particle size of 0,2 mm has been obtained. In this way no clots or fiber portions are present, which are not suitable for the early childhood feeding.

Said ingredients were sanitized before thei adding which takes place at 40°C. The products obtained from the diferent mixings were packaged with dynamic mixers so as to mix uniformly the different components (concentrate from UF, cream, sugar, fruit preparations) saving their homogeneity and structure which are suitable for the subsequent end homogenization. Said mixers work in co and counter-current of the product. They are able to mix the product also at low speed, avoiding a possible lamination and destructuration. They comprise a twin spiral rotating for allowing the semi-finished product and the fruit preparation be mixed in the product entering the lower part of the apparatus.

## Claims

1. A process for preparing a fresh, creamy, fruit-containing spread containing live thermophilic lactic ferments in a ratio of cocci to rods of 5-15:1, being free from flavouring agents, preservants, antioxidants, thickeners, acidity controllers and other additives and having an average content of fat matter of 26% on the dry substance, said process consisting of the following steps:
a) preliminary milk treatment, comprising cleaning, optional titration, pre-heating, pasteurization, cooling and introduction into maturation tanks pressurized with sterile air;
b) maturation, comprising the inoculation of different thermopilic lactic ferments species in a ratio of cocci to rods of 5-15:1 and in a amount of 1%, rennet addition and curd breaking, the maturation being carried out for a time of 6 hours and until a pH of 4.9-5.0 is reached;
c) concentration, consisting in subjecting the acidified product at 38-40°C obtained in step (b) to uninterrupted ultrafiltration (UF) at a constant temperature of 40°C, thus obtaining a permeate and a semi-finished product;
d) mixing and homogenization, in which the semi-finished product obtained in step (c) is mixed with pasteurized cream and sugar and a fruit preparation is added to the semi-finished product mixed with pasteurized cream and sugar the end product not being subjected to any further heat treatment for microbic stabilization after coagulation;
e) packaging, in which the product after the homogenization step is sent to a sterile device able for its metering and for sealing the package.

2. The process of claim 1, wherein the ratio of cocci to rods is of 10:1.

3. The process of claim 1, wherein as thermophilic ferments S. thermophilus and L. bulgaricus are employed, and during inoculation step also L. acidophilus and Bifido-bacterium infantis in an amount of 0,5-1%, based on total weight of matured milk, are added.

4. The process of claim 1, wherein the homogenization is carried out at a pressure of 100-200 bar.

5. The process of claim 1, wherein the fruit preparation added in step d) is refined until 0.2 mm and consists of a fully natural fruit preparation, that is free from flavouring agents, antioxidants, thickeners, preservants and acidity controllers, said preparation being added in an amount of 27-30%, based on the concentrated semi-finished product mixed with pasteurized cream and sugar.

6. The process of claim 1, wherein the fruit preparation is selected from:
- mashed apples, sugar
- mashed bananas, sugar
- mashed strawberries, strawberry juice, raspberry juice, mashed raspberries, blueberry juice, mashed blueberries (the so called woodberry mixture), sugar
- mashed apricots, sugar
- mashed pineapples, sugar
- mashed citrus, sugar
- mashed pears. sugar
- mashed strawberries, sugar
- mashed raspbnerries, sugar
- mashed blueberries, sugar.

7. A fresh, creamy, fruit-containing spread containing live thermophilic lactic ferments in the ratio of cocci to rods of 5-15:1, being free from flavouring agents, preservants, antioxidants, thickeners, acidity controllers and other additives, having an average content of fat matter on the dry substance of 26%, and being obtainable by the process of one or more of claims 1 to 6.

8. The spread of claim 7, having a structure with a particle size of 0,2 mm.

## Patentansprüche

1. Verfahren zur Zubereitung eines frischen, cremigen, Früchte enthaltenden Aufstriches, enthaltend thermophile, lebende Milchfermente in einem Verhältnis zwischen Kokken und stabförmigen Bakterien von 5-15:1, wobei der Aufstrich frei von aromatisierenden Stoffen, Konservierungsmitteln, oxydierungsbeständigen Mitteln, Verdichtungsmitteln, Säurekorrektionsmitteln und weiteren Zusätzen ist und einen mittlern Gehalt an Fetten von 26% des Trockenstoffes besitzt, wobei das Verfahren die folgende Arbeitschritte umfaßt:
a) Vorbehandlung der Milch, umfassend die Reinigung, eventuell eine Titration, Vorwärmung, Pasteurisierung, Abkühlung und Einführung in mit steriler Luft unter Druck gesetzte Reifebehälter;
b) Reifen, das die Inokulation verschiedener Arten von thermophilen Milchfermenten in einen Verhältnis zwischen Kokken und stabförmigen Bakterien von 5-15:1 und in einer Menge von 1%, die Zugabe von Lab und das Brechen der Koagulation umfaßt, wobei das Reifen für einen Zeitraum von 6 Stunden durchgeführt wird, bis ein pH-Wert von 4,9 - 5,0 erreicht wird;
c) Konzentration, die darin besteht, daß das bei 38-40°C gesäuerte beim Arbeitsschritt b) erhaltene Produkt einer ständigen Ultrafiltration (UF) bei einer konstanten Temperatur von 40°C unterzogen wird, wobei so ein Permeat und ein Halbfertigprodukt erhalten wird;
d) Vermischung und Homogenisation, wobei das beim Arbeitsschritt c) erhaltene Halbfertigprodukt mit pasteurisierter Sahne und Zucker vermischt und ein Früchtepräparat dem mit pasteurisierter Milch und Zucker vermischten Halbfertigprodukt zugegeben wird, wobei das Endprodukt keiner weiteren Wärmebehandlung zur mikrobischen Stabilisierung nach der Koagulation unterzogen wird;
e) Verpackung, bei der das Produkt nach dem Arbeitsschritt der Homogenisation einer sterilen Vorrichtung zugeführt wird, die die Dosierung und die hermethische Schließung der Verpackung vornimmt.

2. Verfahren nach Anspruch 1, bei dem das Verhältnis zwischen Kokken und stabförmigen Bakterien bei 10:1 liegt.

3. Verfahren nach Anspruch 1, bei dem als thermophile Milchfermente S. thermophilus und L. bulgaricus verwendet werden und während des Arbeitsschrittes der Inokulation auch L. acidophilus und Bifido-bacterium infantis in einer Menge von 0,5-1% auf dem Gesamtgewicht der reifen Milch zugesetzt werden.

4. Verfahren nach Anspruch 1, bei dem die Homogenisation bei einem Druck von 100-200 bar erfolgt.

5. Verfahren nach Anspruch 1, bei dem die Zubereitung von dem Arbeitsschritt d) zugefügten Früchten bis zu 0,2 mm raffiniert wird und in einer Zubereitung von völlig natürlichen Früchten besteht, d.h. frei von aromatisierenden Stoffen, oxydationsbeständigen Mitteln, Verdichtungsmitteln, Konservierungsmitteln und Säurekorrektoren sind, wobei dieses Präparat in einer Menge von 27-30% des konzentrierten, mit pasteurisierter Sahne und Zucker vermischten Halbfertigproduktes zugeführt wird.

6. Verfahren nach Anspruch 1, bei dem die Früchtezubereitung gewählt wird unter:
- Apfelpüree, Zucker
- Bananenpüree, Zucker
- Erdbeerenpüree, Erdbeerensaft, Himbeersaft, Himbeerpüree, Heidelbeerensaft, Heidelbeerenpüree (die sogenannte Waldbeerenmischung, Zucker
- Aprikosenpüree, Zucker
- Ananaspüree, Zucker
- Zitrusfrüchtepüree, Zucker
- Birnenpüree, Zucker
- Erdbeerenpüree, Zucker
- Himbeerenpüree, Zucker
- Heidelbeerenpüree, Zucker.

7. Frischer, cremiger, Früchte enthaltender Aufstrich, enthaltend lebende Thermophile, Milchfermente in einem Verhältnis zwischen Kokken und stabförmigen Bakterien von 5-15:1, wobei der Aufstrich frei von aromatisierenden Stoffen, von Konservierungsmitteln, oxydationsbeständigen Mitteln, Verdichtungsmitteln, Säurekorrektoren und weiteren Zusätzen ist, mit einem mittleren Gehalt an Fetten gegenüber dem trockenen Stoff von 26% und erhaltbar mit dem Verfahren gemäß einem oder mehreren der Patentansprüche von 1 bis 6.

8. Aufstrich nach Anspruch 7, mit einer Korngröße von 0,2 mm.

## Revendications

1. Procédé pair la préparation d'une denrée a tartiner fraîche crémeuse contenant des fruits, laquelle contient des ferments lactiques vifs thermophiles dans un rapport entre coques et bâtonnets de 5-15:1, cette denrée étant sans aromatisants, conservateurs, antioxydants, épaississants, correcteurs d'acidité et autres additifs et ayant un contenu moyen de matière grasse de 26% sur la substance sèche, ledit procédé comprenant les étapes suivantes:
a) traitement préalable du lait, comprenant nettoyage, éventuel titrage, pré-chauffage, pasteurisation, refroidissement et introduction dans les cuves de maturation mises sous pression avec de l'air stérile;
b) maturation, comprenant l'inoculation de plusieurs espèces de ferments lactiques thermophiles dans un rapport entre coques et bâtonnets de 5-15:1 et en raison de 1%, l'addition de présure et la rupture du caillot, la maturation étant exécutée pendant une période de temps de 6 heures et jusqu'à quand on a atteint un pH de 4,9-5,0;
c) concentration, qui consiste à soumettre le produit acidifié a 38-40°C obtenu pendant l'étape b) à ultrafiltration (UF) continue à une température constante de 40°C, de manière à obtenir un filtrat et un produit semi-fini;
d) mélange et homogénéisation, où au produit semi-fini obtenu de l'étape c) sont incorporés de la crème pasteurisée et du sucre, et une préparation de fruits est ajoutée au produit semi-fini auquel on a incorporé la crème pasteurisée et le sucre, le produit final n'étant soumis à aucun autre traitement thermique pour la stabilisation microbienne après la coagulation;
e) conditionnement, où le produit, après l'étape d'homogénéisation, est envoyé à un dispositif stérile qui effectue le dosage et la fermeture étanche de l'emballage.

2. Procédé selon la revendication 1, dans lequel le rapport entre coques et bâtonnets est de 10:1.

3. Procédé selon la revendication 1, dans lequel on utilise en tant que ferments thermophiles S. thermophilus et L. bulgaricus et pendant l'étape d'inoculation an y ajoute également L. acidophilus et Bifido-bacterium infantis en une quantité de 0,5-1% sur la base du poids total du lait mûr.

4. Procédé selon la revendication 1, dans lequel l'homogénéisation est exécutée à une pression de 100-200 bars.

5. Procédé selon la revendication 1, dans lequel la préparation de fruits ajoutée pendant l'étape d) est raffinée jusqu'à 0,2 mm et consiste en une préparation de fruits complètement naturelle, c'est-à-dire sans aromatisants, antioxydants, épaississants, conservaterus et correcteurs d'acidité, ladite préparation étant ajoutée en une quantité de 27-30%, sur la base du produit semi-fini concentré auquel an a incorporé la crème pasteurisée et le sucre.

6. Procédé selon la revendication 1, dans lequel la préparation de fruits est choisie parmi:
- purée de pommes, sucre
- purée de bananes, sucre
- purée de fraises, jus de fraises, jus de framboises, purée de framboises, jus de myrtilles, purée de myrtilles (mélange couramment dénommé de "fruits des bois"), sucre
- purée d'abricots, sucre
- purée d'ananas, sucre
- purée d'agrumes, sucre
- purée de paires, sucre
- purée de fraises, sucre
- purée de framboises, sucre
- purée de myrtilles, sucre.

7. Denrée à tartiner fraîche crémeuse contenant des fruits, laquelle contient des ferments lactiques vifs thermophiles dans un rapport entre coques et bâtonnets de 5-15:1, cette denrée étant sans aromatisants, conservateurs, antioxydants, épaississants, correcteurs d'acidité et autres additifs et ayant un contenu moyen de matière grasse sur la substance sache de 26%, et pouvant être obtenue par le procédé selon une ou plusieurs des revendications 1 à 6.

8. Denrée à tartiner selon la revendication 7, ayant une structure avec granulométrie de 0,2 mm.
